(19) Europäisches Patentamt
European Patent Office
Office européen des brevets

(11) **EP 1 470 018 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**27.12.2023 Patentblatt 2023/52**

(45) Hinweis auf die Patenterteilung:
**08.06.2016 Patentblatt 2016/23**

(21) Anmeldenummer: **03706393.0**

(22) Anmeldetag: **28.01.2003**

(51) Internationale Patentklassifikation (IPC):
**B60L 11/16** (2006.01)    **B60L 11/18** (2006.01)
**B60L 11/00** (2006.01)

(52) Gemeinsame Patentklassifikation (CPC):
**B60L 58/12; B60L 50/30; B60L 50/40; B60L 50/51;**
B60L 2200/26; Y02T 10/70

(86) Internationale Anmeldenummer:
**PCT/EP2003/000837**

(87) Internationale Veröffentlichungsnummer:
**WO 2003/064225 (07.08.2003 Gazette 2003/32)**

(54) **FAHRZEUG MIT BREMSENERGIESPEICHER**

VEHICLE WITH BRAKING ENERGY ACCUMULATOR

VEHICULE A ACCUMULATEUR D'ENERGIE DE FREINAGE

(84) Benannte Vertragsstaaten:
**AT BE BG CH CY CZ DE DK EE ES FI FR GB GR HU IE IT LI LU MC NL PT SE SI SK TR**

(30) Priorität: **28.01.2002 DE 10204215**

(43) Veröffentlichungstag der Anmeldung:
**27.10.2004 Patentblatt 2004/44**

(73) Patentinhaber: **ALSTOM Transportation Germany GmbH**
**10587 Berlin (DE)**

(72) Erfinder:
• **STEINER, Michael**
**8050 Zürich (CH)**
• **GACHET, Benoit**
**8800 Thalwil (CH)**

(74) Vertreter: **Cohausz & Florack**
**Patent- & Rechtsanwälte**
**Partnerschaftsgesellschaft mbB**
**Postfach 10 18 30**
**40009 Düsseldorf (DE)**

(56) Entgegenhaltungen:
**DE-A- 19 718 480    DE-C- 19 700 893**
**US-A- 5 998 960**

• **PATENT ABSTRACTS OF JAPAN vol. 2000, no. 26, 1. Juli 2002 (2002-07-01) & JP 2001 240322 A (MITSUBISHI ELECTRIC CORP;TOKYO ELECTRIC POWER CO INC:THE), 4. September 2001 (2001-09-04) & US 2001/017234 A1 (IKURO SUGA) 30. August 2001 (2001-08-30)**

**EP 1 470 018 B2**

## EP 1 470 018 B2

**Beschreibung**

Die vorliegende Erfindung betrifft ein Schienenfahrzeug, mit einer Energieversorgungseinrichtung, einer damit verbundenen elektrischen Antriebseinrichtung, einer mit der Antriebseinrichtung verbundenen Energiespeichereinrichtung zum Speichern von Bremsenergie in einer Bremsphase des Fahrzeugs und zum Abgeben der gespeicherten Energie an die Antriebseinrichtung in einer Beschleunigungsphase des Fahrzeugs sowie einer Steuereinrichtung zur Steuerung des Betriebs der Energieversorgungseinrichtung, des Energiespeichers und der Antriebseinrichtung. Sie betrifft weiterhin ein entsprechendes Verfahren zum Betreiben eines solchen Fahrzeugs.

Bei einem typischen Fahrzeug im Sinne der vorliegenden Erfindung, beispielsweise einem Diesel-Triebzug, besteht der Antriebsstrang aus einer Energieversorgungseinrichtung mit wenigstens einem Dieselmotor und einem Generator, einem Gleichrichter, einem Spannungszwischenkreis sowie einer Antriebseinrichtung mit Wechselrichter und einem oder mehreren entsprechenden Elektromotoren. Aus dem Zwischenkreis werden auch die Hilfsantriebe und sonstigen elektrisch betriebenen Module des Fahrzeugs gespeist. Bei diesen Fahrzeugen ist die maximale Traktionsleistung üblicherweise durch den Dieselmotor begrenzt, der in der Regel das schwächste Glied der Antriebskette darstellt.

Bei moderneren, gattungsgemäßen Fahrzeugen wurde aus Gründen der Energieeinsparung vorgeschlagen, Energiespeicher zu verwenden, welche beim Abbremsen des Fahrzeugs einen Teil der Bremsenergie speichern, um diese Energie beim erneuten Beschleunigen des Fahrzeugs zusätzlich zur Verfügung zu stellen. Bei solchen Fahrzeugen, die für den Betrieb mit Energiespeicher vorgesehen sind, ist der Energiespeicher meist über ein Stellglied, beispielsweise einen Stromrichter, am Zwischenkreis angeschlossen. Ein solches Fahrzeug ist beispielsweise aus "The Innovative Traction System with the Flywheel of the LIREX", Autor: Bernd Engel, WCRR (World Congress on Railway Research), Köln, 2001, bekannt. Bei diesem bekannten Prototypen umfasst der Energiespeicher ein Schwungrad, welches unter Nutzung der Bremsenergie in Rotation versetzt wird und so einen Teil der Bremsenergie als kinetische Energie in Form von Rotationsenergie speichert. Diese kinetische Energie kann dann in einer Beschleunigungsphase, beispielsweise beim Anfahren, wieder in elektrische Energie umgewandelt werden und der Antriebseinrichtung zusätzlich zur Verfügung gestellt werden.

Ein Fahzeug gemäß der Stand der Technik ist auch vom Dokument DE-C-197 00 893 bekannt. Zur Klarstellung sei hier angemerkt, dass der Begriff "Beschleunigung" in der vorliegenden Anmeldung stets im Zusammenhang mit einer Erhöhung der Geschwindigkeit des Fahrzeugs verwendet wird, während im Zusammenhang mit einer Verringerung der Geschwindigkeit des Fahrzeugs der Begriff "Bremsen" verwendet wird.

Bei den bekannten Fahrzeugen besteht jedoch das Problem, dass die verfügbaren Energiespeicher relativ aufwändig und damit teuer sind. Dabei müssen sie nicht zuletzt auf Grund einer wenig optimalen Ausnutzung der Bremsenergie in der Regel relativ groß dimensioniert sein, um eine ausreichende Menge an Bremsenergie zu speichern.

Der vorliegenden Erfindung liegt daher die Aufgabe zu Grunde, ein Fahrzeug bzw. ein Verfahren der eingangs genannten Art zur Verfügung zu stellen, welches die genannten Nachteile nicht oder zumindest in geringerem Maße aufweist und insbesondere eine einfache und kostengünstige Gestaltung der Energiespeichereinrichtung gewährleistet.

Die vorliegende Erfindung löst diese Aufgabe ausgehend von einem Fahrzeug gemäß dem Oberbegriff des Anspruchs 1 durch die im kennzeichnenden Teil des Anspruchs 1 angegebenen Merkmale. Sie löst diese Aufgabe weiterhin ausgehend von einem Verfahren gemäß dem Oberbegriff des Anspruchs 13 durch die im kennzeichnenden Teil des Anspruchs 13 angegebenen Merkmale.

Der vorliegenden Erfindung liegt die technische Lehre zu Grunde, dass man eine besonders einfache und kostengünstig gestaltete Energiespeicher Einrichtung erzielen kann, wenn die Steuereinrichtung derart ausgebildet ist, dass die Energie der Energiespeichereinrichtung in der Beschleunigungsphase zur Erzielung einer hohen Beschleunigung über einen kurzen ersten Zeitraum abgegeben wird.

Durch die über einen kurzen Zeitraum, d. h. mit einer hohen Leistung erfolgende Abgabe der gespeicherten Energie ist es nicht nur möglich, hohe Beschleunigungswerte zu erzielen, die insbesondere bei vergleichsweise kurzen Abständen zwischen Haltestellen des Fahrzeugs von größerem Interesse sind als eine möglichst hohe Endgeschwindigkeit, um kurze Fahrzeiten zwischen Haltestellen zu erreichen. Gerade wenn die Haltestellenabstände kurz sind, ist eine hohe Beschleunigung wichtiger als eine hohe Endgeschwindigkeit, welche eventuell gar nicht erreicht wird, da das Fahrzeug bereits vorher abgebremst wird.

Zudem ist es mit dieser Betriebsweise möglich, bei einer bestimmten vorgegebenen Fahrzeit, beispielsweise zwischen zwei Haltestellen, eine deutlich kleinere Dimensionierung der Energiespeichereinrichtung zu erzielen als bei herkömmlichen Ausführungen, bei denen die in der Energiespeichereinrichtung gespeicherte Energie über einen langen Zeitraum, beispielsweise die gesamte Beschleunigungsphase, abgegeben wird. Durch die erfindungsgemäße, gute Ausnutzung der in der Energiespeichereinrichtung gespeicherten Energie und die damit einhergehende Dimensionierung der Energiespeichereinrichtung werden die verhältnismäßig hohen Kosten für die Energiespeichereinrichtung deutlich gesenkt. Insbesondere die richtige Wahl der Leistung eines Energiespeicher kann dabei in vorteilhafter Weise zur Optimierung genutzt werden.

Ein weiterer Vorteil der erfindungsgemäßen Lösung liegt darin, dass nunmehr die Leistungsreserven der elektrischen Antriebseinrichtung ausgenutzt werden können und auch ausgenutzt werden. Demgegenüber ist bei üblicherweise verwendeten autonom betrieben Fahrzeugen, z.B. bei einem diesel-elektrischen Triebzug, die Antriebsleistung durch die maximale Leistung der Energieversorgungseinrichtung, also beispielsweise des Dieselmotors begrenzt, die in der Regel deutlich unter der Maximalleistung der elektrischen Antriebseinrichtung liegt, also beispielsweise des elektrischen Traktionsteils (Stromrichter und Motoren).

Mit anderen Worten wird erfindungsgemäß zur hohen Anfahrbeschleunigung des Fahrzeuges möglichst viel Leistung aus der Energiespeichereinrichtung zusätzlich zur maximalen Leistung der Energieversorgungseinrichtung genutzt.

Bei bevorzugten Varianten des erfindungsgemäßen Fahrzeugs ist der erste Zeitraum deutlich kürzer ist als die Beschleunigungsphase. Der erste Zeitraum sollte dabei so kurz wie möglich sein. Erfindungsgemäß ist der erste Zeitraum derart gewählt, dass die Energie der Energiespeichereinrichtung im wesentlichen vollständig abgegeben ist, wenn das Fahrzeug 30 bis 70%, vorzugsweise 30 bis 50%, einer vorgegebenen Maximalgeschwindigkeit erreicht hat. Hierdurch ergeben sich besonders günstige Beschleunigungsverhältnisse. Gegebenenfalls können auch noch kürzerer erste Zeiträume realisiert werden.

Bei vorteilhaften Varianten des erfindungsgemäßen Fahrzeugs ist vorgesehen, dass die Steuereinrichtung derart ausgebildet ist, dass die Energie der Energiespeichereinrichtung in der Beschleunigungsphase mit einer zur möglichst weitgehenden Ausnutzung der maximalen Leistung der Antriebseinrichtung ausreichenden Leistung abgegeben wird. Hierdurch ergibt sich in vorteilhafter Weise eine optimale Ausnutzung der vorhandenen Leistungsreserven. Demgemäß kann auch die Antriebseinrichtung entsprechend optimiert und damit kostengünstig dimensioniert werden.

Am Ende der Beschleunigungsphase, wenn die Energiespeichereinrichtung fast leer ist, steigen die Verluste in der Energiespeichereinrichtung stark an. In dieser Phase kann, je nach Auslegung der Energiespeichereinrichtung, ein Absenken der Leistung aus der Energiespeichereinrichtung sinnvoll sein. Dies kann auf unterschiedliche Weise geschehen. Besonders einfach ist dies bei bevorzugten Varianten der Erfindung durch Begrenzung des Stromes in der Energiespeichereinrichtung auf einen Maximalwert zu erreichen. Vorzugsweise ist die Steuereinrichtung daher zur Begrenzung des Entladestromes der Energiespeichereinrichtung wenigstens am Ende des Entladevorganges der Energiespeichereinrichtung ausgebildet.

Die Strombegrenzung bewirkt eine Leistungsbegrenzung und hat mehrere Effekte: zum einen werden die Verluste im Energiespeicher gesenkt, zum anderen ist der Ausgangsstrom des Stromrichters für die Energiespeichereinrichtung begrenzt, schließlich haben Halbleiter und andere Komponenten (z. B. Drosseln etc.) einen maximalen Auslegungsstrom.

Besonders vorteilhafte Ausführungen der Erfindung betreffen ein Fahrzeug mit einer Energieversorgungseinrichtung, einer damit verbundenen elektrischen Antriebseinrichtung, einer mit der Antriebseinrichtung verbundenen Energiespeichereinrichtung zum Speichern von Bremsenergie in einer Bremsphase des Fahrzeugs und zum Abgeben der gespeicherten Energie an die Antriebseinrichtung in einer Beschleunigungsphase des Fahrzeugs sowie einer Steuereinrichtung zur Steuerung des Betriebs der Energieversorgungseinrichtung, des Energiespeichers und der Antriebseinrichtung. Erfindungsgemäß ist die Steuereinrichtung zur Reduzierung der Verluste in der Energiespeichereinrichtung durch verlustoptimierte Steuerung des Ladestromes der Energiespeichereinrichtung über einen zweiten Zeitraum während der Bremsphase ausgebildet. Die verlustoptimierte Steuerung wirkt sich vor allen Dingen auf die Verlustwärme und damit den zu betreibenden Aufwand für die Kühlung der Energiespeichereinrichtung aus, der hiermit deutlich reduziert werden kann. Durch diese verlustoptimierte Steuerung ist es gegebenenfalls auch möglich, die Speicherkapazität der Energiespeichereinrichtung möglichst vollständig auszunutzen. Hierdurch lässt sich wiederum eine entsprechend optimierte Auslegung bzw. kleinere und damit kostengünstige Dimensionierung der Energiespeichereinrichtung erzielen.

Die verlustoptimierte Steuerung des Ladestromes der Energiespeichereinrichtung über einen zweiten Zeitraum während der Bremsphase zur Reduzierung der Verluste in der Energiespeichereinrichtung stellt im Übrigen einen unabhängig von der erfindungsgemäßen Steuerung der Energieabgabe während der Beschleunigungsphase eigenständig schutzfähigen Erfindungsgedanken dar, welcher die eingangs genannte Aufgabe ebenfalls löst.

Eine besonders günstige Ausnutzung der Bremsenergie ergibt sich bei bevorzugten Ausgestaltungen des erfindungsgemäßen Fahrzeugs, bei denen sich der zweite Zeitraum im wesentlichen über die gesamte Bremsphase erstreckt.

Die Verlustoptimierung des Ladevorgangs lässt sich auf unterschiedliche Weise erzielen. Eine besonders gute und einfach zu realisierende Verlustoptimierung ergibt sich bei bevorzugten Varianten des erfindungsgemäßen Fahrzeugs, bei denen die Steuereinrichtung zur Erzielung eines im wesentlichen konstanten Ladestromes ausgebildet ist. Der Effektivwert des Ladestroms entspricht dann über den Ladezeitraum im wesentlichen seinem Mittelwert, wodurch sich auch die Verluste entsprechend minimieren.

Bei bevorzugten Varianten des erfindungsgemäßen Fahrzeugs ist vorgesehen, dass die Steuereinrichtung zur Bestimmung des Ladestromes aus der zum vollständigen Aufladen der Energiespeichereinrichtung erforderlichen Energie und der zum Aufladen verfügbaren Energie ausgebildet ist. Hierdurch lässt sich in einfacher Weise eine an die tatsächlichen Verhältnisse angepasste verlustoptimierte Steuerung erzielen.

So kann beispielsweise aus der Kenntnis der Geschwindigkeit und einigen fahrzeugabhängigen Größen, wie z.B. Masse etc., die zur Verfügung stehende kinetische Bremsenergie bestimmt werden. Bei Berücksichtigung der Fahrwiderstände, der zu versorgenden Hilfsantriebe, der aktuellen Steigung kann dann die aktuelle Überschussenergie ermittelt werden, die zur Ladung des Energiespeichers zur Verfügung steht. Die zur vollständigen Ladung der Energiespeichereinrichtung erforderliche Energie ist ebenfalls bekannt. Bei Doppelschichtkondensatoren ist diese durch die aktuellen Spannungswert und die Sollspannung bei Volladung vorgegeben. Bei Schwungradspeichern ist diese durch die aktuelle Schwungradgeschwindigkeit und deren Sollwert bei Volladung. In beiden Fällen können hierbei zur Vereinfachung Verluste vernachlässigt werden.

Bei bevorzugten Varianten der Erfindung, die mit den heute üblichen Abtastregelungen arbeiten, werden die hier genannten, konstanten Größen durch die Steuereinrichtung mehrfach während eines Bremsvorganges neu berechnet und korrigiert, sodass in vorteilhafter Weise nicht berücksichtigte parasitäre Effekte (z.B. Fehler bei Steigung oder fahrgastabhängiger Masse) reduziert werden.

Aus Schutzgründen ist auch während des Bremsvorganges vorzugsweise eine Begrenzung auf einen maximalen Strom in die Energiespeichereinrichtung vorgesehen.

Bei dem erfindungsgemäßen Fahrzeug kann es sich um ein beliebiges schienengebundenes Fahrzeug handeln. Besonders vorteilhaft lässt sich die Erfindung im Zusammenhang mit schienengebundenen Fahrzeugen einsetzen, wie sie üblicherweise im öffentlichen Personenverkehr bzw. Güterverkehr eingesetzt werden, da gerade hier die Vorteile der Erfindung, insbesondere hinsichtlich des optimierten Beschleunigungsverhaltens, besonders gut zum Tragen kommen.

Die Energiespeichereinrichtung kann ebenfalls in beliebiger bekannter, zur Speicherung entsprechend großer Energiemengen geeigneter Weise ausgebildet sein. So kann es sich bei der Energiespeichereinrichtung beispielsweise um einen entsprechend gestalteten Schwungradspeicher oder dergleichen handeln. Bei vorteilhaften Varianten des erfindungsgemäßen Fahrzeugs weist die Energiespeichereinrichtung wenigstens einen Kondensator zum Speichern der Bremsenergie auf. Diese Varianten haben den Vorteil, dass sie nur wenige bewegte Teile enthalten und damit einen entsprechend verschleißarmen bzw. wenig wartungsintensiven Betrieb garantieren.

Zur Zeit befinden sich kapazitive Energiespeicher in der Entwicklung, die für den Einsatz in Schienenfahrzeugen geeignet sind. Dies sind insbesondere Doppelschichtkondensatoren, wie beispielsweise (sogenannte SuperCaps, Boost-Caps, Ultracapacitors).

Die vorliegende Erfindung lässt sich in Zusammenhang mit Fahrzeugen einsetzen, die eine beliebig gestaltete Energieversorgungseinrichtung aufweisen. Hierbei kann sie auch bei Fahrzeugen eingesetzt werden, die zeitweise oder sogar permanent über entsprechende Kontakteinrichtungen aus einem Energieversorgungsnetz gespeist werden.

Besonders vorteilhaft lässt sich die Erfindung natürlich im Zusammenhang mit einem Fahrzeug einsetzen, das als zumindest zeitweise autonom betriebenes Fahrzeug ausgebildet ist, da hier die Vorteile gegenüber einem nicht mit der Erfindung ausgestatteten vergleichbaren Fahrzeug deutlich in den Vordergrund treten. Bei einem zeitweise über ein entsprechendes Energieversorgungsnetz versorgten Fahrzeug ergibt sich hier zudem noch der Vorteil, dass Energie aus der Energiespeichereinrichtung in das Versorgungsnetz zurück gespeist werden kann, sobald ein entsprechender Kontakt zum Energie Versorgungsnetz besteht. Vorzugsweise umfasst die Energieversorgungseinrichtung eine autonome Motor-Generator-Einrichtung.

Besonders vorteilhaft lässt sich die Erfindung im Zusammenhang mit bekannten Aggregaten einsetzen, die einen Brennstoffantrieb umfassen, beispielsweise als im Zusammenhang mit einem diesel-elektrischen Aggregat. Es versteht sich natürlich auch, dass die Erfindung natürlich auch im Zusammenhang mit einer eine Brennstoffzelle umfassenden Energieversorgungseinrichtung eingesetzt werden kann.

Die vorliegende Erfindung betrifft weiterhin ein entsprechendes Verfahren zum Betreiben eines Schienenfahrzeugs, mit einer Energieversorgungseinrichtung, einer damit verbundenen elektrischen Antriebseinrichtung, einer mit der Antriebseinrichtung verbundenen Energiespeichereinrichtung zum Speichern von Bremsenergie in einer Bremsphase des Fahrzeugs und zum Abgeben der gespeicherten Energie an die Antriebseinrichtung in einer Beschleunigungsphase des Fahrzeugs, wobei der Betrieb der Energieversorgungseinrichtung, des Energiespeichers und der Antriebseinrichtung über eine Steuereinrichtung gesteuert wird. Erfindungsgemäß wird die Energie der Energiespeichereinrichtung in der Beschleunigungsphase zur Erzielung einer hohen Beschleunigung über einen kurzen ersten Zeitraum abgegeben. Die Merkmale und Vorteile des erfindungsgemäßen Verfahrens wurden vorstehend bereits in Zusammenhang mit dem erfindungsgemäßen Fahrzeug geschrieben, sodass hier auf die obigen Ausführungen Bezug genommen wird.

Die vorliegende Erfindung betrifft weiterhin ein Verfahren zum Betreiben eines Fahrzeugs mit einer Energieversorgungseinrichtung, einer damit verbundenen elektrischen Antriebseinrichtung, einer mit der Antriebseinrichtung verbundenen Energiespeichereinrichtung zum Speichern von Bremsenergie in einer Bremsphase des Fahrzeugs und zum Abgeben der gespeicherten Energie an die Antriebseinrichtung in einer Beschleunigungsphase des Fahrzeugs, wobei der Betrieb der Energieversorgungseinrichtung, des Energiespeichers und der Antriebseinrichtung über eine Steuereinrichtung gesteuert wird. Erfindungsgemäß erfolgt dabei über einen zweiten Zeitraum während der Bremsphase zur Reduzierung der Verluste in der Energiespeichereinrichtung eine verlustoptimierte Steuerung des Ladestromes der Energiespeichereinrichtung. Die Merkmale und Vorteile des erfindungsgemäßen Verfahrens wurden vorstehend ebenfalls bereits in Zusammenhang mit dem erfindungsgemäßen Fahrzeug geschrieben, sodass hier auf die obigen Ausführungen Bezug genommen wird.

Weitere bevorzugte Ausführungen in der Erfindung ergeben sich aus den Unteransprüchen bzw. der nachfolgenden Beschreibungen bevorzugter Ausführungsbeispiele, welche auf die beigefügten Zeichnungen Bezug nimmt. Es zeigen:

Figur 1          ein Blockschaltbild des Antriebsstrangs einer Ausführungsform des erfindungsgemäßen Fahrzeugs.

Figur 2A, 2B     eine Gegenüberstellung von ZugkraftGeschwindigkeits-Diagrammen eines Vergleichsfahrzeugs und einer Ausführungsform des erfindungsgemäßen Fahrzeugs;

Figur 3A, 3B     eine Gegenüberstellung von LeistungsGeschwindigkeits-Diagrammen (P-v) des Vergleichsfahrzeugs und der Ausführungsform des erfindungsgemäßen Fahrzeugs aus Figur 2;

Figur 4A, 4B     eine Gegenüberstellung von GeschwindigkeitsZeit-Diagrammen (v-t) des Vergleichsfahrzeugs und der Ausführungsform des erfindungsgemäßen Fahrzeugs aus Figur 2;

Figur 5A, 5B     eine Gegenüberstellung von Leistungs-Zeitbzw. Fahrwegs-Zeit-Diagrammen (P-t bzw. w-t) des Vergleichsfahrzeugs und der Ausführungsform des erfindungsgemäßen Fahrzeugs aus Figur 2;

Figur 6          einen Ausschnitt der Bremsphase der Ausführungsform zu Figur 5B;

Figur 7          einen Ausschnitt der Fahrphase der Ausführungsform zu Figur 5B.

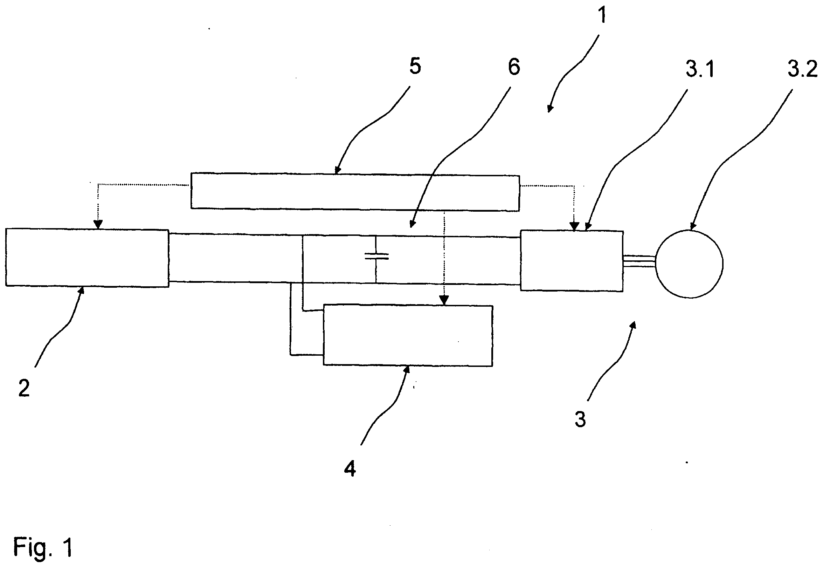

Figur 1 zeigt ein Blockschaltbild des Antriebsstrangs 1 einer bevorzugten Ausführungsform des erfindungsgemäßen Fahrzeugs, welches entsprechend dem erfindungsgemäßen Verfahren betrieben wird.

Der Antriebsstrang 1 umfasst eine Energieversorgungseinrichtung 2, eine damit verbundene elektrischen Antriebseinrichtung 3 und eine mit der Antriebseinrichtung 3 verbundene Energiespeichereinrichtung 4. Diese Energiespeichereinrichtung 4 dient zum Speichern von Bremsenergie, die während einer Bremsphase des Fahrzeugs aufgenommen wird sowie zum Abgeben der gespeicherten Energie an die Antriebseinrichtung 3, wenn sich das Fahrzeug in einer Beschleunigungsphase, beispielsweise beim Anfahren oder Zwischenbeschleunigen, befindet. Der Betrieb der Energieversorgungseinrichtung 2, der Energiespeichereinrichtung 4 und der Antriebseinrichtung 3 wird über eine entsprechende Steuereinrichtung 5 gesteuert bzw. geregelt. Die Energieversorgungseinrichtung 2 und die Energiespeichereinrichtung 4 sind über einen Zwischenkreis 6 mit der Antriebseinrichtung 3 verbunden.

Die Antriebseinrichtung 3 umfasst im gezeigten Beispiel einen Wechselrichter 3.1 und Verbraucher 3.2, wie beispielsweise einen oder mehrere Traktionsmotoren und Hilfsantriebe des Fahrzeugs.

Die Steuereinrichtung 5 steuert den Betrieb der Komponenten zum einen so, dass die Energie der Energiespeichereinrichtung 4 in der Beschleunigungsphase zur Erzielung einer hohen Beschleunigung über einen möglichst kurzen ersten Zeitraum abgegeben wird. In der Bremsphase steuert sie den Betrieb der Komponenten zum anderen so, dass über einen zweiten Zeitraum während der Bremsphase zur Reduzierung der Verluste in der Energiespeichereinrichtung 4 eine verlustoptimierte Steuerung des Ladestromes der Energiespeichereinrichtung 4 erfolgt.

Die erfindungsgemäße Betriebsweise wird im Folgenden anhand einer Gegenüberstellung eines Vergleichsfahrzeuges mit einer Ausführung eines erfindungsgemäßen Fahrzeugs dargelegt.

Betriebsweise in der Anfahr- bzw. Fahrphase:

Um kurze Fahrzeiten zwischen Haltestellen zu erreichen sind hohe Beschleunigungen notwendig. Insbesondere wenn die Haltestellenabstände kurz sind, ist eine hohe Beschleunigung wichtiger als eine hohe Endgeschwindigkeit, welche eventuell gar nicht erreicht wird, da das Fahrzeug bereits vorher abgebremst wird.

Die erfindungsgemäße Betriebsweise nutzt zur hohen Anfahrbeschleunigung des Fahrzeuges möglichst viel Leistung aus der Energiespeichereinrichtung 4 zusätzlich zur maximalen Leistung der Energieversorgungseinrichtung 2, beispielsweise in Form eines diesel-elektrischen Aggregats. Damit wird die maximale Leistung des Antriebsstranges 1 durch die maximale Leistung der Antriebseinrichtung 3 (Stromrichter und Motoren) begrenzt und nicht mehr durch die Leistung der Energieversorgung (z.B. des Dieselmotors).

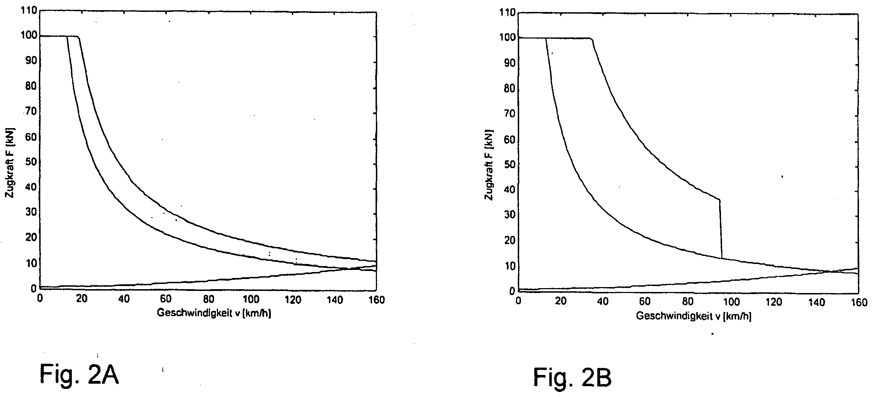

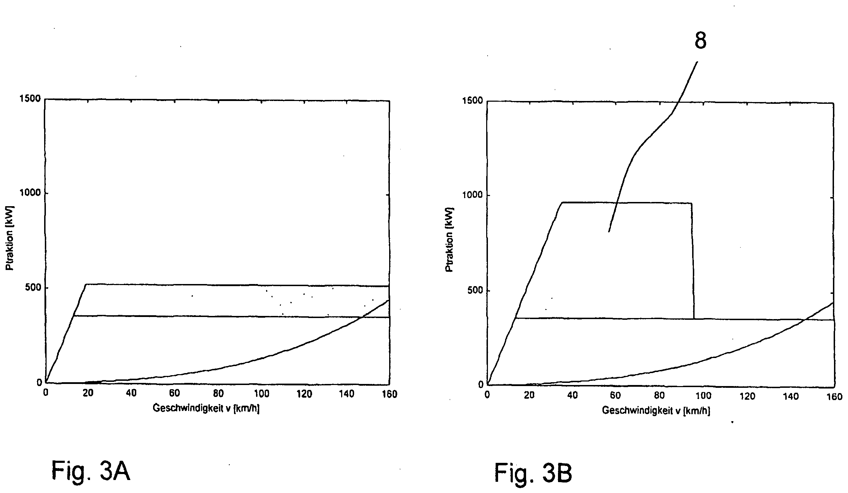

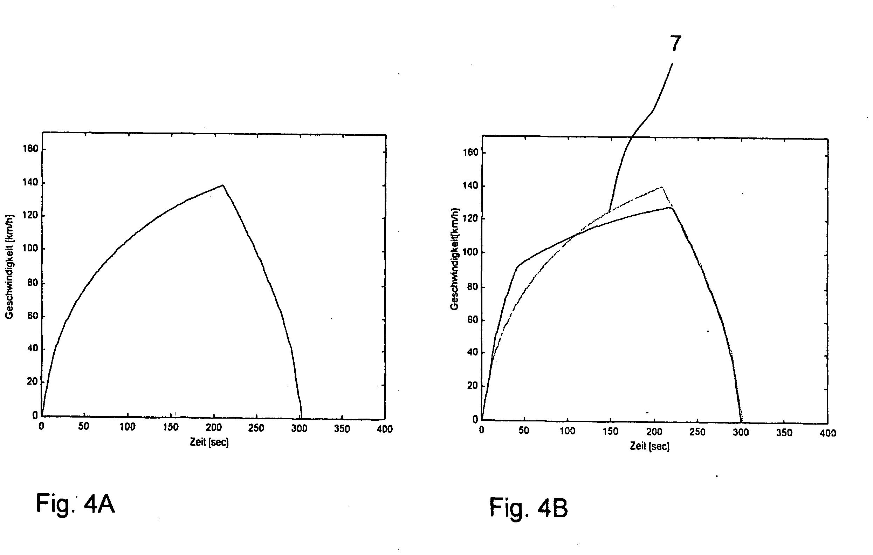

Zur einfachen Darstellung der Erfindung ist die Vergleichs-Betriebsweise eines Vergleichsfahrzeugs und die erfindungsgemäße Betriebsweise in den Figuren 2 bis 5 gegenüber gestellt. Die Figuren mit dem Buchstaben "A" bezeichnen dabei jeweils das Vergleichsfahrzeug, während die Figuren mit dem Buchstaben "B" dem erfindungsgemäßen zugeordnet sind. Zunächst sind die unterschiedlichen Zugkraft-Geschwindigkeits-Diagramme (Figur 2A und 2B) und die Leistungs-Geschwindigkeits-Diagramme (Figur 3A und 3B) vorgegeben, die zur unterschiedlichen Fahrdynamik führen. Im Geschwindigkeits-Zeit-Diagramm (Figur 4A und 4B) ist, zur besseren Übersicht, die Geschwindigkeitskurve 7 der Vergleichs-Lösung in die Darstellung der erfindungsgemäßen Betriebsweise in Figur 4B eingefügt worden.

Bei der Darstellung der Geschwindigkeit in Figur 4B erkennt man deutlich die höhere Anfahrbeschleunigung des erfindungsgemäßen Verfahrens. Im Beispiel ist die Energiespeichereinrichtung beim erfindungsgemäßen Verfahren bereits nach ca. 30 Sekunden leer. Bei dem Vergleichs-Verfahren wird während der gesamten Beschleunigungsphase eine konstante Leistung aus dem Zwischenkreis entnommen.

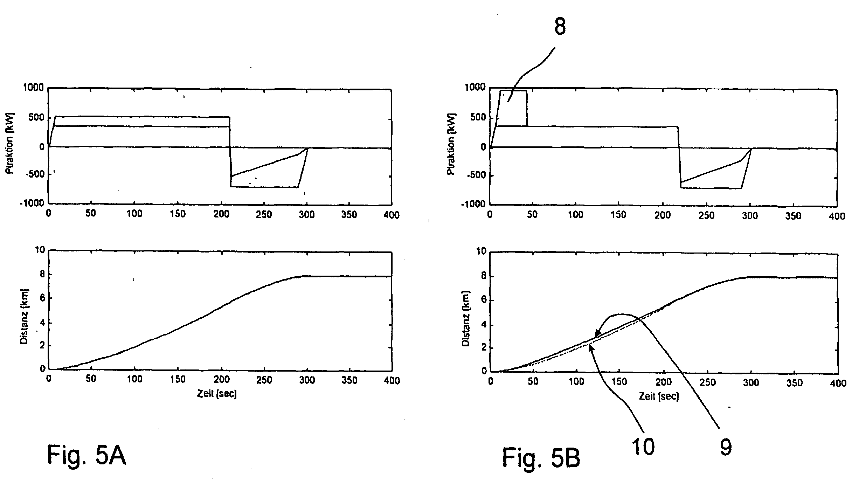

In den Figuren 3 und 5 ist die Traktionsleistung, zusammengesetzt aus der Leistung aus der Energieversorgungseinrichtung 2, z. B. dem Diesel, und der Leistung aus der Energiespeichereinrichtung dargestellt. Der Bereich 8 kennzeichnet dabei den Bereich der Leistung, der durch die Energiespeichereinrichtung 4 zusätzlich zur Leistung der Energieversorgungseinrichtung 2 erzielt wird.

Wie Figur 3B zu entnehmen ist, endet der erste Zeitraum, also der Zeitraum bis zur im wesentlichen vollständigen Entleerung der Energiespeichereinrichtung, im gezeigten Beispiel etwa dann, wenn 60% der vorgegebenen Maximalgeschwindigkeit von 160 km/h erreicht sind. Es versteht sich, dass bei anderen Varianten der Erfindung auch noch deutlich kürzere erste Zeiträume erzielt werden können, sodass die Entleerung der Energiespeichereinrichtung schon bei einem deutlich geringeren Anteil der Maximalgeschwindigkeit erfolgt ist.

Im gewählten Beispiel führen folgende Werte zum notwendigen Energieinhalt der im Folgenden als Energiespeichers "ES" bezeichneten Energiespeichereinrichtung:

| Vergleichs-Betriebsweise | erfindungsgemäße Betriebsweise |
|---|---|
| $P_{ES}$ = 16 0 KW | $P_{ES}$ = 600 kW |
| $t_{ES}$ = 202 sec (7 bis 209sec) | $t_{ES}$ = 36 sec (8 bis 44sec) |
| $E_{ES}$ = 9 kWh (100%) | $E_{ES}$ = 6 kWh (66%) |

Die erfindungsgemäße Betriebsweise führt offensichtlich zu einem deutlich kleineren Energiespeicher als die Vergleichs-Betriebsweise, bei gleicher Fahrzeit.

Bei den hohen Kosten für den Energiespeicher, ist dies das primäre Ziel. Es soll noch bemerkt werden, das der Gesamtenergieverbrauch bei beiden Verfahren nahezu gleich hoch ist. Das erfindungsgemäße Verfahren kann aufgrund des kleineren Energiespeichers zwar weniger Bremsenergie speichern, als bei der naheliegenden Betriesweise, jedoch ist die zur Verfügung stehende Bremsenergie in der Regel auch kleiner, aufgrund der geringeren Geschwindigkeit zu Beginn des Bremsvorganges.

Im Zeit-Fahrwegs-Diagramm der Figur 5B (unten) sind die Kurve 9 für das erfindungsgemäße Fahrzeug und die Kurve 10 für das Vergleichs-Fahrzeug überlagert. Es ist deutlich zu erkennen, dass sich bei dem erfindungsgemäßen Fahrzeug gerade auf kurzen Strecken dank der deutlich höheren Anfahrbeschleunigung merklich geringere Fahrzeiten ergeben.

Betriebsweise in der Bremsphase:

Bei sinnvoller Auslegung des Energiespeichers, ist bei vielen Streckenabschnitten, die zur Verfügung stehende Bremsenergie deutlich größer als die zu speichernde Energie im Energiespeicher. In diesem Falle ergibt sich auch hier ein Freiheitsgrad im Betrieb des Energiespeichers der zur Optimierung der Betriebsweise im Bremsvorgang benutzt werden soll.

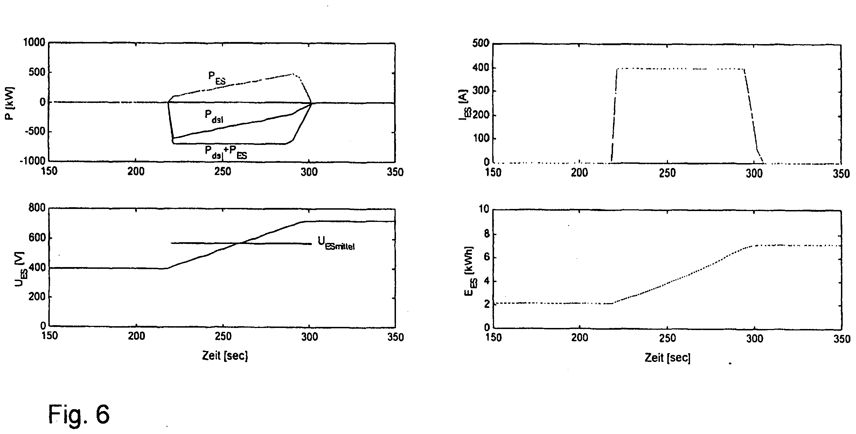

Zur besseren Übersicht sind Kenngrößen in der Bremsphase aus Figur 5B vergrößert in Figur 6 dargestellt.

Aus der Kenntnis der Geschwindigkeit und einigen fahrzeugabhängigen Größen, wie z.B. Masse etc., kann die zur Verfügung stehende kinetische Bremsenergie ($E_{kin} \sim m*v^2$) bestimmt werden. Bei Berücksichtigung der Fahrwiderstände, der zu versorgenden Hilfsantriebe, der aktuellen Steigung etc. kann die aktuelle Überschussenergie $E_{brems}$ ermittelt werden, die zur Ladung des Energiespeichers zur Verfügung steht.

Die zur vollständigen Ladung des Energiespeichers erforderliche Energie ist bekannt. Bei Doppelschichtkondensatoren ist sie durch den aktuellen Spannungswert und die Sollspannung bei Volladung ($E_{ES}=0.5*C* (U_{soll} - U(t))^2$) vorgegeben. Bei Schwungradspeichern durch den aktuelle Schwungradgeschwindigkeit und deren Sollwert bei Volladung ($E_{ES}=0.5*m*(v_{soll} - v(t))^2$) . Verluste sind hier zur Vereinfachung vernachlässigt.

Die mittlere Leistung zur Ladung des Energiespeichers beim Bremsvorgang kann bestimmt werden:

$$P_{ESmittel}/P_{bremsmax}=E_{ES}/E_{brems}$$

Aus dem Mittelwert der Leistung kann jetzt die optimale Betriebsweise des Energiespeichers bestimmt werden.

Bei Doppelschichtkondensatoren sind die Verluste hauptsächlich durch Ihren seriellen Widerstand bestimmt. Die Verluste sind quadratisch zum Stromeffektivwert ($P_V=R*I_{eff}^2$). • Der Stromeffektivwert ist am kleinsten, wenn der Strom i(t) einen konstanten Verlauf hat, daher seinem Mittelwert entspricht. Um die Verluste im Energiespeicher zu minimieren, wird beim erfindungsgemäßen Verfahren daher beim Bremsvorgang der Strom in den Kondensator im wesentlichen konstant gehalten. Bei konstantem Strom in einen Kondensator steigt die Spannung des Kondensators linear an. Der Spannungsmittelwert des Energiespeichers ist somit:

$$U_{ESmittel} = (U_{ES}(t) + U_{ESsoll})/2$$

Dabei ist $U_{ESsoll}$ die Sollspannung bei voll aufgeladenem Energiespeicher.

Hieraus kann jetzt der verlustoptimale Strom in den Energiespeicher bestimmt werden:

$$I_{optimal} = P_{ESmittel} / U_{ESmittel}$$

Die resultierende Leistung in den Energiespeicher ist zeitabhängig und kann über die aktuelle Spannung des Energiespeichers bestimmt werden:

$$P_{ES}(t) = U_{ES}(t) * I_{optimal}$$

Bei einer bevorzugten Abtastregelung werden die hier vorgestellten, konstanten Größen häufiger während eines Bremsvorganges neu berechnet und korrigiert, sodass nicht berücksichtigte parasitäre Effekte (z.B. Fehler bei Steigung oder fahrgastabhängiger Masse) reduziert werden.

Es versteht sich, dass das für Doppelschichtkondensatoren optimierte erfindungsgemäße Verfahren auf Schwungradspeicher übertragen werden kann.

Im einfachsten Fall, wenn der Motor im Schwungradspeicher keinen Feldschwächbereich hat, ist die Motorspannung linear zur Drehzahl, bzw. Geschwindigkeit. Ein kleiner Motorstrom ist auch hier Wünschenswert, da hierdurch die Kupferverluste des Motors aber auch die Verlustleistung des Stromrichters verringert werden. Das oben vorgestellte Verfahren kann nach dem Dualitätsprinzip auch hier angewendet werden, indem man die Größen Spannung $U_{ES}$ gegen Geschwindigkeit $V_{ES}$ (bzw. gegen die Motordrehzahl) austauscht.

Aus Schutzgründen ist die Begrenzung auf einen maximalen Strom in den Energiespeicher sinnvoll.

Betriebsweise in der Fahrphase:

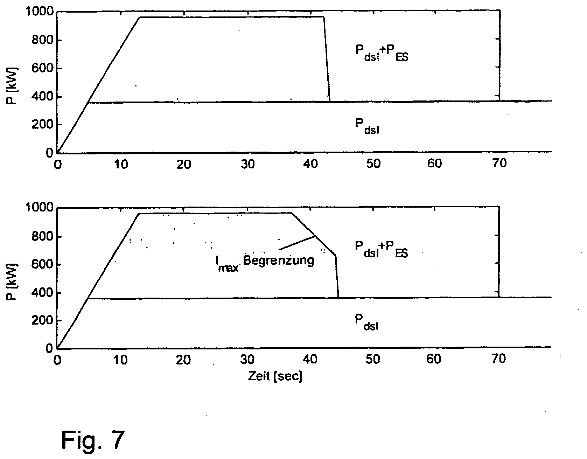

Am Ende der Beschleunigungsphase, wenn der Energiespeicher fast leer ist, steigen die Verluste im Energiespeicher stark an. In dieser Phase kann, je nach Auslegung des Energiespeichers, ein Absenken der Leistung aus dem Energiespeicher sinnvoll sein. Dies ist einfach zu erreichen durch Begrenzung des Stromes in den Energiespeicher auf einen Maximalwert. Die Strombegrenzung bewirkt, genau wie in der Bremsphase, eine Leistungsbegrenzung, siehe Figur 7, in der im oberen Diagramm keine Begrenzung des Maximalstromes $I_{Esmax}$ in den Energiespeicher vorgenommen wird, während dies im unteren Diagramm der Fall ist. Diese Strombegrenzung hat mehrere Effekte: a) die Verluste im Energiespeicher werden gesenkt, b) der Ausgangsstrom des Stromrichters für den Energiespeicher ist begrenzt und c) eventuell notwendige Halbleiter oder andere Komponenten (z.B. Drosseln) haben einen maximalen Auslegungsstrom

Die Erkennung ob sich ein Fahrzeug in der Anfahrphase oder in der Bremsphase befindet ist mit verschiedenen Verfahren möglich. Um ein Beispiel zu nennen: Anfahrphase: der Sollwert der Zugkraft ist positiv'nach einer Haltephase (Zeitdauer mit Geschwindigkeit 0). Bremsphase: der Sollwert der Zugkraft ist negativ bei einer Geschwindigkeit größer Null.

Die vorliegende Erfindung wurde vorstehend anhand von Beispielen autonomer Fahrzeuge, beispielsweise einem diesel-elektrischen Triebzug, mit einem diesel-elektrischen Aggregat als Energieversorgungseinrichtung beschrieben. Es versteht sich jedoch, dass sie auch im Zusammenhang mit anderen Energieversorgungseinrichtungen zum Einsatz kommen kann. So kann es sich bei der Energieversorgungseinrichtung beispielsweise um eine Brennstoffzelle handeln. Ebenso kann es sich bei einem teilautonomen Fahrzeug oder einem nicht-autonomen, netzgespeisten Fahrzeug um ein Energieversorgungsnetz etc. handeln.

**EP 1 470 018 B2**

**Patentansprüche**

1. Schienenfahrzeug mit einer Energieversorgungseinrichtung (2), einer damit verbundenen elektrischen Antriebseinrichtung (3), einer mit der Antriebseinrichtung (3) verbundenen Energiespeichereinrichtung (4) zum Speichern von Bremsenergie in einer Bremsphase des Fahrzeugs und zum Abgeben der gespeicherten Energie an die Antriebseinrichtung (3) in einer Beschleunigungsphase des Fahrzeugs, wobei die Energieversorgungseinrichtung (2) und die Energiespeichereinrichtung (4) über einen Zwischenkreis (6) mit der Antriebseinrichtung (3) verbunden sind, sowie einer Steuereinrichtung (5) zur Steuerung des Betriebs der Energieversorgungseinrichtung (2), der Energiespeichereinrichtung (4) und der Antriebseinrichtung (3), **dadurch gekennzeichnet, dass** die Steuereinrichtung (5) derart ausgebildet ist, dass die Energie der Energiespeichereinrichtung (4) in der Beschleunigungsphase zur Erzielung einer hohen Beschleunigung über einen kurzen ersten Zeitraum abgegeben wird, wobei zur Beschleunigung Leistung aus der Energiespeichereinrichtung (4) zusätzlich zur maximalen Leistung der Energieversorgungseinrichtung (2) genutzt wird, wobei der erste Zeitraum geringer ist als die Beschleunigungsphase und wobei der erste Zeitraum derart gewählt ist, dass die Energie der Energiespeichereinrichtung (4) im Wesentlichen vollständig abgegeben ist, wenn das Fahrzeug 30 bis 70% einer vorgegebenen Maximalgeschwindigkeit erreicht hat.

2. Schienenfahrzeug nach Anspruch 1, **dadurch gekennzeichnet, dass** der erste Zeitraum weniger als 17,2% der Dauer der Beschleunigungsphase beträgt.

3. Schienenfahrzeug nach Anspruch 1 oder 2, **dadurch gekennzeichnet, dass** der erste Zeitraum derart gewählt ist, dass die Energie der Energiespeichereinrichtung (4) im Wesentlichen vollständig abgegeben ist, wenn das Fahrzeug 30 bis 50% einer vorgegebenen Maximalgeschwindigkeit erreicht hat.

4. Schienenfahrzeug nach einem der vorhergehenden Ansprüche, **dadurch gekennzeichnet, dass** die Steuereinrichtung (5) derart ausgebildet ist, dass die Energie der Energiespeichereinrichtung (4) in der Beschleunigungsphase mit einer zur Ausnutzung der maximalen Leistung der Antriebseinrichtung (3) ausreichenden Leistung abgegeben wird.

5. Schienenfahrzeug nach einem der vorhergehenden Ansprüche, **dadurch gekennzeichnet, dass** die Steuereinrichtung (5) zur Begrenzung des Entladestromes der Energiespeichereinrichtung (4) wenigstens am Ende des Entladevorganges der Energiespeichereinrichtung (4) ausgebildet ist.

6. Schienenfahrzeug nach einem der vorhergehenden Ansprüche mit einer Energieversorgungseinrichtung (2), einer damit verbundenen elektrischen Antriebseinrichtung (3), einer mit der Antriebseinrichtung verbundenen Energiespeichereinrichtung (4) zum Speichern von Bremsenergie in einer Bremsphase des Fahrzeugs und zum Abgeben der gespeicherten Energie an die Antriebseinrichtung (3) in einer Beschleunigungsphase des Fahrzeugs sowie einer Steuereinrichtung (5) zur Steuerung des Betriebs der Energieversorgungseinrichtung (2), der Energiespeichereinrichtung (4) und der Antriebseinrichtung (3), **dadurch gekennzeichnet, dass** die Steuereinrichtung (5) zur Reduzierung der Verluste in der Energiespeichereinrichtung (4) durch verlustoptimierte Steuerung des Ladestromes der Energiespeichereinrichtung (4) über einen zweiten Zeitraum während der Bremsphase ausgebildet ist.

7. Schienenfahrzeug nach Anspruch 6, **dadurch gekennzeichnet, dass** sich der zweite Zeitraum im Wesentlichen über die gesamte Bremsphase erstreckt.

8. Schienenfahrzeug nach Anspruch 6 oder 7, **dadurch gekennzeichnet, dass** die Steuereinrichtung (5) zur Erzielung eines im Wesentlichen konstanten Ladestromes ausgebildet ist.

9. Schienenfahrzeug nach einem der Ansprüche 6 bis 8, **dadurch gekennzeichnet, dass** die Steuereinrichtung (5) zur Bestimmung des Ladestromes aus der zum vollständigen Aufladen der Energiespeichereinrichtung (4) erforderlichen Energie und der zum Aufladen verfügbaren Energie ausgebildet ist.

10. Schienenfahrzeug nach einem der vorhergehenden Ansprüche, **dadurch gekennzeichnet, dass** die Energiespeichereinrichtung (4) wenigstens einen Kondensator, insbesondere einen Doppelschichtkondensator, zum Speichern der Bremsenergie aufweist.

11. Schienenfahrzeug nach einem der vorhergehenden Ansprüche, **dadurch gekennzeichnet, dass** die Energiespeichereinrichtung (4) wenigstens einen Schwungradspeicher zum Speichern der Bremsenergie aufweist.

12. Schienenfahrzeug nach einem der vorhergehenden Ansprüche, **dadurch gekennzeichnet, dass** es als zumindest zeitweise autonom betriebenes Fahrzeug ausgebildet ist, wobei vorzugsweise die Energieversorgungseinrichtung (2) eine autonome Motor-GeneratorEinrichtung umfasst, die insbesondere einen Brennstoffantrieb umfasst.

13. Verfahren zum Betreiben eines Schienenfahrzeugs mit einer Energieversorgungseinrichtung (2), einer damit verbundenen elektrischen Antriebseinrichtung (3), einer mit der Antriebseinrichtung verbundenen Energiespeichereinrichtung (4) zum Speichern von Bremsenergie in einer Bremsphase des Fahrzeugs und zum Abgeben der gespeicherten Energie an die Antriebseinrichtung (3) in einer Beschleunigungsphase des Fahrzeugs, wobei die Energieversorgungseinrichtung (2) und die Energiespeichereinrichtung (4) über einen Zwischenkreis (6) mit der Antriebseinrichtung (3) verbunden sind, wobei der Betrieb der Energieversorgungseinrichtung (2), der Energiespeichereinrichtung (4) und der Antriebseinrichtung (3) über wenigstens eine Steuereinrichtung (5) gesteuert wird, **dadurch gekennzeichnet, dass** die Energie der Energiespeichereinrichtung (4) in der Beschleunigungsphase zur Erzielung einer hohen Beschleunigung über einen kurzen ersten Zeitraum abgegeben wird, wobei zur Beschleunigung Leistung aus der Energiespeichereinrichtung (4) zusätzlich zur maximalen Leistung der Energieversorgungseinrichtung (2) genutzt wird, wobei der erste Zeitraum geringer ist als die Beschleunigungsphase und wobei der erste Zeitraum derart gewählt ist, dass die Energie der Energiespeichereinrichtung (4) im Wesentlichen vollständig abgegeben ist, wenn das Fahrzeug 30 bis 70% einer vorgegebenen Maximalgeschwindigkeit erreicht hat.

14. Verfahren nach Anspruch 13, **dadurch gekennzeichnet, dass** der erste Zeitraum weniger als 17,2% der Dauer der Beschleunigungsphase beträgt.

15. Verfahren nach Anspruch 13 oder 14, **dadurch gekennzeichnet, dass** der erste Zeitraum derart gewählt ist, dass die Energie der Energiespeichereinrichtung (4) im Wesentlichen vollständig abgegeben ist, wenn das Fahrzeug 30 bis 50%, einer vorgegebenen Maximalgeschwindigkeit erreicht hat.

16. Verfahren nach einem der Ansprüche 13 bis 15, **dadurch gekennzeichnet, dass** die Energie der Energiespeichereinrichtung (4) in der Beschleunigungsphase mit einer zur Ausnutzung der maximalen Leistung der Antriebseinrichtung (3) ausreichenden Leistung abgegeben wird.

17. Verfahren nach einem der Ansprüche 13 bis 16, **dadurch gekennzeichnet, dass** der Entladestrom der Energiespeichereinrichtung (4) wenigstens am Ende des Entladevorganges der Energiespeichereinrichtung(4) begrenzt wird.

18. Verfahren zum Betreiben eines Fahrzeugs nach einem der Ansprüche 13 bis 17 mit einer Energieversorgungseinrichtung (2), einer damit verbundenen elektrischen Antriebseinrichtung (3), einer mit der Antriebseinrichtung (3) verbundenen Energiespeichereinrichtung (4) zum Speichern von Bremsenergie in einer Bremsphase des Fahrzeugs und zum Abgeben der gespeicherten Energie an die Antriebseinrichtung (3) in einer Beschleunigungsphase des Fahrzeugs, wobei der Betrieb der Energieversorgungseinrichtung (2), der Energiespeichereinrichtung (4) und der Antriebseinrichtung (3) über wenigstens eine Steuereinrichtung (5) gesteuert wird, **dadurch gekennzeichnet, dass** über einen zweiten Zeitraum während der Bremsphase zur Reduzierung der Verluste in der Energiespeichereinrichtung (4) eine verlustoptimierte Steuerung des Ladestromes der Energiespeichereinrichtung (4) erfolgt.

19. Verfahren nach Anspruch 18, **dadurch gekennzeichnet, dass** sich der zweite Zeitraum im Wesentlichen über die gesamte Bremsphase erstreckt.

20. Verfahren nach Anspruch 18 oder 19, **dadurch gekennzeichnet, dass** der Ladestrom im Wesentlichen konstant gehalten wird.

21. Verfahren nach einem der Ansprüche 18 bis 20, **dadurch gekennzeichnet, dass** der verlustoptimierte Ladestrom aus der zum vollständigen Aufladen der Energiespeichereinrichtung (4) erforderlichen Energie und der zum Aufladen verfügbaren Energie bestimmt wird.

**Claims**

1. Rail vehicle, with an energy supply device (2), an electric drive device (3) connected thereto, an energy storage device (4) connected to the drive device (3) for storing braking energy in a braking phase of the vehicle and for releasing the stored energy to the drive device (3) in an acceleration phase of the vehicle, wherein the energy supply device (2) and the energy storage device (4) are connected to the drive device (3) via an intermediate circuit (6), and a control device (5) for controlling the operation of the energy supply device (2), the energy storage device (4) and the drive device (3), **characterized in that** the control device (4) is configured such that, to achieve a high acceleration, the energy of the energy storage device (4), in the acceleration phase, is released over a short first period, whereby power from the energy storage device (4) is used for acceleration in addition to the maximum power of the energy supply device (2), the first period being shorter than the acceleration phase, and wherein the first period is selected such that the energy of the energy storage device (4) is substantially completely released when the vehicle has reached 30 to 70% of a predetermined maximum speed.

2. Rail vehicle according to claim 1, **characterized in that** the first period is less than 17.2% of the duration of the acceleration phase.

3. Rail vehicle according to claim 1 or 2, **characterized in that** the first period is chosen such that the energy of the energy storage device (4) is substantially completely released when the vehicle has reached 30 to 50% of a predefined maximum speed.

4. Rail vehicle according to one of the preceding claims, **characterized in that** the control device (5) is configured such that the energy of the energy storage device (4), in the acceleration phase, is released at a power which is sufficient for utilization of the maximum power of the drive device (3).

5. Rail vehicle according to one of the preceding claims, **characterized in that** the control device (5) is configured for limiting the discharge current of the energy storage device (4) at least at the end of the release operation of the energy storage device (4).

6. Rail vehicle according to one of the preceding claims with an energy supply device (2), an electric drive device (3) connected thereto, an energy storage device (4) connected to the drive device (3) for storing braking energy in a braking phase of the vehicle and for releasing the stored energy to the drive device (3) in an acceleration phase of the vehicle, and a control device (5) for controlling the operation of the energy supply device (2), the energy storage device (4) and the drive device (3), **characterized in that** the control device (5) is configured for reducing the losses of the energy storage device (4) by loss optimized control of the charging current of the energy storage device (4) over a second period during the braking phase.

7. Rail vehicle according to claim 6, **characterized in that** the second time period extends over substantially the entire braking phase.

8. The Rail vehicle according to claim 6 or 7, **characterized in that** the control device (5) is configured for achieving a substantially constant charging current.

9. Rail vehicle according to one of claims 6 to 8, **characterized in that** the control device (5) is configured for determining the charging current from the energy required for fully charging the energy storage device (4) and the energy available for charging.

10. Rail vehicle according to one of the preceding claims, **characterized in that** the energy storage device (4) comprises at least one capacitor, in particular a double layer capacitor, for storing the braking energy.

11. Rail vehicle according to one of the preceding claims, **characterized in that** the energy storage device (4) comprises at least one flywheel accumulator to storing the braking energy.

12. Rail vehicle according to any one of the preceding claims, **characterized in that** it is configured as an at least temporarily autonomously operated vehicle, wherein the energy supply means (2) preferably comprises an autonomous motor-generator device, in particular comprising a fuel drive.

13. A method for operating a rail vehicle with an energy supply device (2), an electric drive device (3) connected thereto, an energy storage device (4) connected to the drive device (3) for storing braking energy in a braking phase of the vehicle and for releasing the stored energy to the drive device (3) in an acceleration phase of the vehicle, wherein the energy supply device (2) and the energy storage device (4) are connected to the drive device (3) via an intermediate circuit (6), wherein control of the operation of the energy supply device (2), the energy storage device (4) and the drive device (3) is provided via at least one and a control device (5), **characterized in that**, to achieve a high acceleration, the energy of the energy storage device (4), in the acceleration phase, is released over a short first period, whereby power from the energy storage device (4) is used for acceleration in addition to the maximum power of the energy supply device (2), the first period being shorter than the acceleration phase, and wherein the first period is selected such that the energy of the energy storage device (4) is substantially completely released when the vehicle has reached 30 to 70% of a predetermined maximum speed.

14. The method according to claim 13, **characterized in that** the first period is less than 17.2% of the duration of the acceleration phase.

15. The method according to claim 13 or 14, **characterized in that** the first period is chosen such that the energy of the energy storage device (4) is substantially completely released when the vehicle has reached 30 to 50% of a predefined maximum speed.

16. The method according to any one of claims 13 to 15, **characterized in that** the energy of the energy storage device (4), in the acceleration phase, is released at a power which is sufficient for utilization of the maximum power of the drive device (3).

17. The method according to any one of claims 13 to 16, **characterized in that** the discharge current of the energy storage device (4) is limited at least at the end of the release operation of the energy storage device (4).

18. A method for operating a vehicle according to one of claims 13 to 17 with an energy supply device (2), an electric drive device (3) connected thereto, an energy storage device (4) connected to the drive device (3) for storing braking energy in a braking phase of the vehicle and for releasing the stored energy to the drive device (3) in an acceleration phase of the vehicle, wherein the operation of the energy supply device (2), the energy storage device (4) and the drive device (3) is controlled via at least one control device (5), **characterized in that**, for reducing the losses of the energy storage device (4), a loss optimized control of the charging current of the energy storage device (4) is implemented over a second period during the braking phase.

19. The method according to claim 18, **characterized in that** the second time period extends over substantially the entire braking phase.

20. The method according to claim 18 or 19, **characterized in that** the charging current is kept substantially constant.

21. The method according to one of claims 18 to 20, **characterized in that** the loss-optimized charging current is determined from the energy required for fully charging the energy storage device (4) and the energy available for charging.

**Revendications**

1. Véhicule ferroviaire, avec un dispositif d'alimentation d'énergie (2), un dispositif d'entraînement électrique (3) relié à celui-ci, un dispositif de stockage d'énergie (4) relié au dispositif d'entraînement (3) pour stocker de l'énergie de freinage dans une phase de freinage du véhicule et pour décharger l'énergie stockée vers le dispositif d'entraînement (3) dans une phase d'accélération du véhicule, où le dispositif d'alimentation d'énergie (2) et le dispositif de stockage d'énergie (4) sont reliés au dispositif d'entraînement (3) via un circuit intermédiaire (6), et un dispositif de commande (5) pour commander le fonctionnement du dispositif d'alimentation d'énergie (2), du dispositif de stockage d'énergie (4) et du dispositif d'entraînement (3), **caractérisé en ce que** le dispositif de commande (4) est formé de telle sorte que, afin d'atteindre un niveau élevé d'accélération, l'énergie du dispositif de stockage d'énergie (4), dans la phase d'accélération, , est déchargée pendant une première période courte, où la puissance venant du dispositif de stockage d'énergie (4) est utilisée pour l'accélération en plus de la puissance maximale du dispositif d'alimentation en énergie (2), la première période étant plus courte que la phase d'accélération, et où la première période est sélectionnée de telle sorte que l'énergie du dispositif de stockage d'énergie (4) soit sensiblement entièrement libérée lorsque le véhicule a atteint 30 à 70 % d'une vitesse maximale prédéterminée.

2. Véhicule ferroviaire selon la revendication 1 **caractérisé en ce que** la première période est moins de 17,2% de la durée de la phase d'accélération.

3. Véhicule ferroviaire selon la revendication 1 ou 2, **caractérisé en ce que** la première période est choisie de telle sorte que l'énergie du dispositif de stockage d'énergie (4) soit sensiblement entièrement déchargée lorsque le véhicule a atteint 30 à 50% d'une vitesse maximale prédéfinie.

4. Véhicule ferroviaire selon l'une des revendications précédentes, **caractérisé en ce que** le dispositif de commande (5) est formé de telle sorte que l'énergie du dispositif de stockage d'énergie (4) soit déchargée dans la phase d'accélération avec une puissance suffisante pour l'utilisation de la puissance maximale du dispositif d'entraînement (3).

5. Véhicule ferroviaire selon l'une des revendications précédentes, **caractérisé en ce que** le dispositif de commande (5) est formé pour limiter le courant de décharge du dispositif de stockage d'énergie (4) au moins à la fin de l'opération de décharge du dispositif de stockage d'énergie (4).

6. Véhicule ferroviaire selon l'une des revendications précédentes avec un dispositif d'alimentation d'énergie (2), un dispositif d'entraînement électrique (3) relié à celui-ci, un dispositif de stockage d'énergie (4) relié au dispositif d'entraînement (3) pour stocker de l'énergie de freinage dans une phase de freinage du véhicule et pour décharger l'énergie stockée vers le dispositif d'entraînement (3) dans une phase d'accélération du véhicule, et un dispositif de commande (5) pour commander le fonctionnement du dispositif d'alimentation d'énergie (2), du dispositif de stockage d'énergie (4) et du dispositif d'entraînement (3), **caractérisé en ce que** le dispositif de commande (5) est formé pour réduire les pertes dans le dispositif de stockage d'énergie (4) par une commande à pertes optimisées du courant de charge du dispositif de stockage d'énergie (4) au cours d'une seconde période au cours de la phase de freinage.

7. Véhicule ferroviaire selon la revendication 6, **caractérisé en ce que** la seconde période s'étend sensiblement sur la totalité de la phase de freinage.

8. Véhicule ferroviaire selon la revendication 6 ou 7, **caractérisé en ce que** le dispositif de commande (5) est formé pour obtenir un courant de charge sensiblement constant.

9. Véhicule ferroviaire selon l'une des revendications 6 à 8, **caractérisé en ce que** le dispositif de commande (5) est formé pour déterminer le courant de charge à partir de l'énergie nécessaire pour entièrement charger le dispositif de stockage d'énergie (4) et de l'énergie disponible pour le chargement.

10. Véhicule ferroviaire selon l'une des revendications précédentes, **caractérisé en ce que** le dispositif de stockage d'énergie (4) comprend au moins un condensateur, en particulier un condensateur à double couche, pour stocker l'énergie de freinage.

11. Véhicule ferroviaire selon l'une des revendications précédentes, **caractérisé en ce que** le dispositif de stockage d'énergie (4) comprend au moins un accumulateur à volant d'inertie pour le stockage de l'énergie de freinage.

12. Véhicule ferroviaire selon l'une quelconque des revendications précédentes, **caractérisé en ce qu'**il est formé en tant que véhicule opéré au moins temporairement de manière autonome, où de préférence les moyens d'alimentation (2) comprennent un dispositif moteur-générateur autonome, comprenant en particulier un entraînement à carburant.

13. Procédé pour opérer un véhicule ferroviaire, avec un dispositif d'alimentation d'énergie (2), un dispositif d'entraînement électrique (3) relié au dernier, un dispositif de stockage d'énergie (4) relié au dispositif d'entraînement (3) pour stocker de l'énergie de freinage dans une phase de freinage du véhicule et pour décharger l'énergie stockée vers le dispositif d'entraînement (3) dans une phase d'accélération du véhicule, où le dispositif d'alimentation d'énergie (2) et le dispositif de stockage d'énergie (4) sont reliés au dispositif d'entraînement (3) via un circuit intermédiaire (6), où le fonctionnement du dispositif d'alimentation d'énergie (2), du dispositif de stockage d'énergie (4) et du dispositif d'entraînement (3) est commandé par au moins un dispositif de commande (5), **caractérisé en ce que**, afin d'atteindre un niveau élevé d'accélération, l'énergie du dispositif de stockage d'énergie (4), dans la phase d'accélération, est déchargée pendant une première période courte, où la puissance venant du dispositif de stockage d'énergie (4) est utilisée pour l'accélération en plus de la puissance maximale du dispositif d'alimentation en énergie (2), la première période étant plus courte que la phase d'accélération, et où la première période est sélectionnée de telle sorte que l'énergie du dispositif de stockage d'énergie (4) soit sensiblement entièrement libérée lorsque le véhicule a atteint 30 à 70 % d'une vitesse maximale prédéterminée.

14. Procédé selon la revendication 13, **caractérisé en ce que** la première période est moins de 17,2% de la durée de

**EP 1 470 018 B2**

la phase d'accélération.

15. Procédé selon la revendication 13 ou 14, **caractérisé en ce que** la première période est choisie de telle sorte que l'énergie du dispositif de stockage d'énergie (4) soit sensiblement entièrement déchargée lorsque le véhicule a atteint 30 à 50% d'une vitesse maximale prédéfinie.

16. Procédé selon l'une quelconque des revendications 13 à 15, **caractérisé en ce que** l'énergie du dispositif (4) de stockage d'énergie est déchargée dans la phase d'accélération avec une puissance suffisante pour l'utilisation de la puissance maximale du dispositif d'entraînement (3).

17. Procédé selon l'une quelconque des revendications 13 à 16, **caractérisé en ce que** le courant de décharge du dispositif de stockage d'énergie (4) est limité au moins à la fin de l'opération de décharge du dispositif de stockage d'énergie (4).

18. Procédé pour opérer un véhicule selon l'un des revendications 13 à 17 avec un dispositif d'alimentation d'énergie (2), un dispositif d'entraînement électrique (3) relié au dernier, un dispositif de stockage d'énergie (4) relié au dispositif d'entraînement (3) pour stocker de l'énergie de freinage dans une phase de freinage du véhicule et pour décharger l'énergie stockée vers le dispositif d'entraînement (3) dans une phase d'accélération du véhicule, le fonctionnement du dispositif d'alimentation d'énergie (2), du dispositif de stockage d'énergie (4) et du dispositif d'entraînement (3) étant commandé par au moins un dispositif de commande (5), **caractérisé en ce que**, afin de réduire les pertes dans le dispositif de stockage d'énergie (4), une commande à pertes optimisées du courant de charge du dispositif de stockage d'énergie (4) est mise en place au cours d'une seconde période au cours de la phase de freinage.

19. Procédé selon la revendication 18, **caractérisé en ce que** la seconde période s'étend sensiblement sur la totalité de la phase de freinage.

20. Procédé selon la revendication 18ou 19, **caractérisé en ce que** le courant de charge est maintenu sensiblement constant.

21. Procédé selon l'une quelconque des revendications 18 à 20, **caractérisé en ce que** le courant de charge à pertes optimisées est déterminé à partir de l'énergie nécessaire pour entièrement charger le dispositif de stockage d'énergie (4) et de l'énergie disponible pour le chargement

**13**

Fig. 1

Fig. 2B

Fig. 2A

15

Fig. 3B

Fig. 3A

Fig. 4B

Fig. 4A

17

Fig. 5B

Fig. 5A

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19700893 C

**In der Beschreibung aufgeführte Nicht-Patentliteratur**

- **BERND ENGEL.** The Innovative Traction System with the Flywheel of the LIREX. *WCRR (World Congress on Railway Research),* 2001